# EUROPÄISCHE PATENTSCHRIFT

(11) **EP 3 108 137 B1**
(45) Veröffentlichungstag und Bekanntmachung des Hinweises auf die Patenterteilung: **03.06.2020**
(21) Anmeldenummer: 14819018.4
(22) Anmeldetag: 23.12.2014
(51) Int. Cl.: F02M 59/44, F16J 15/32

(54) **KOLBEN-KRAFTSTOFFPUMPE FÜR EINE BRENNKRAFTMASCHINE**
PISTON FUEL PUMP FOR AN INTERNAL COMBUSTION ENGINE
POMPE À CARBURANT À PISTON POUR MOTEUR À COMBUSTION INTERNE

(30) Priorität: 17.02.2014 DE 102014202796
(43) Veröffentlichungstag der Anmeldung: 28.12.2016
(73) Patentinhaber: Robert Bosch GmbH, 70442 Stuttgart (DE)
(72) Erfinder: STRITZEL, Soeren, 71032 Boeblingen (DE); JAHN, Heiko, 71732 Tamm (DE)
(86) Internationale Anmeldenummer: PCT/EP2014/079153
(87) Internationale Veröffentlichungsnummer: WO 2015/120945

(56) Entgegenhaltungen:
- EP-A1- 1 739 305
- DE-A1-102004 026 893
- DE-A1-102009 046 975
- JP-A- H1 122 630
- JP-A- H11 248 003
- JP-A- 2001 349 438
- JP-A- 2005 337 061
- JP-A- 2012 097 712

## Beschreibung

### Stand der Technik

Die Erfindung betrifft eine Kolben-Kraftstoffpumpe nach dem Oberbegriff des Anspruchs 1.

Vom Markt bekannt sind Kraftstoffsysteme von Brennkraftmaschinen, bei denen der Kraftstoff aus einem Kraftstofftank mittels einer mechanisch angetriebenen Kolben-Kraftstoffpumpe unter hohem Druck in ein Kraftstoffrail gefördert wird und von dort aus über Injektoren in Brennräume einer Brennkraftmaschine gelangt.

Beispielsweise bei der aus der DE 10 2004 063 074 A1 bekannten Kolben-Kraftstoffpumpe ist ein verschiebbar gelagerter Pumpenkolben vorgesehen, der Kraftstoff in einem Förderraum der Kolben-Kraftstoffpumpe verdichtet. Der Pumpenkolben ist in einer Kolbenbuchse durch eine enge Passung gleitend und mit einem geringen Dichtspalt geführt. Die Kolbenbuchse muss zum Abstützen und Abdichten über eine Spaltdichtung eine gewisse Länge aufweisen und gegebenenfalls große Querkräfte aufnehmen. Daher wird die Kolbenbuchse oft aus Stahl hergestellt. Aufgrund hoher Toleranzanforderungen wird darüber hinaus eine sogenannte "Kolbenpaarung" verwendet, d.h. jedem Pumpengehäuse wird ein bestimmter Kolben zugeordnet. Ferner muss der Zylinder im Pumpengehäuse aufwendig gehont werden. Es besteht ein Bedürfnis nach einer Kraftstoff-Kolbenpumpe, deren Herstellung weniger aufwendig ist.

Weitere Kolben-Kraftsoffpumpen sind bekannt aus der DE 10 2004 026893 A1, der JP H 11 22630 A, der EP 1739 305 A1 und der JP 2001 349438 A.

### Offenbarung der Erfindung

Das der vorliegenden Erfindung zu Grunde liegende Problem wird durch eine Kraftstoff-Kolbenpumpe mit den Merkmalen des Anspruchs 1 gelöst. Vorteilhafte Weiterbildungen der Erfindung sind in Unteransprüchen genannt. Weitere für die Erfindung wichtige Merkmale finden sich darüber hinaus in der nachfolgenden Beschreibung und in der Zeichnung.

Die erfindungsgemäße Kraftstoff-Kolbenpumpe hat den Vorteil, dass eine Kolbenbuchse und die entsprechende hochgenaue Passung des Kolbens in der Kolbenbuchse nicht mehr zwingend erforderlich ist und somit erhebliche Kosten eingespart werden können. Stattdessen weist die Kolben-Kraftstoffpumpe eine am Umfang des Pumpenkolbens angeordnete Dichtung auf.

Der Erfindung liegt ferner die Zielsetzung zugrunde, die Lebensdauer der Kolben-Kraftstoffpumpe zu maximieren. Ferner wurde erkannt, dass ein im Bereich der Dichtung auftretender Verschleiß maßgeblich durch die zwischen der Dichtung und dem Pumpenzylinder auftretende Reibung verursacht wird.

Die dabei auftretenden Reibphänomene lassen sich je nach Art der auftretenden Kontaktzustände der Reibpartner, hier der Dichtung und des Pumpenzylinders, gemäß der DIN 50281 in Klassen bzw. Phasen einteilen.

So tritt bei der sogenannten Festkörperreibung ein unmittelbarer Kontakt zwischen den Reibpartnern auf. Die auftretenden Reibkräfte und der resultierende Verschleiß sind entsprechend hoch.

Bei der Flüssigkeitsreibung hingegen tritt ein unmittelbarer Kontakt zwischen den Reibpartnern nicht mehr auf. Die Reibpartner sind durch ein flüssiges Medium voneinander getrennt, beispielsweise durch einen durchgängigen Flüssigkeitsfilm, vorliegend beispielsweise durch einen durchgängigen Kraftstofffilm. Die auftretenden Reibkräfte sind hierbei in der Regel erheblich geringer als bei der Festkörperreibung. Entsprechend ist auch der auftretende Verschleiß an den Reibungspartnern entsprechend vermindert.

Ferner kann auch Mischreibung auftreten, die zeitlich und/oder räumlich nebeneinander Anteile der Festkörperreibung und Anteile der Flüssigkeitsreibung aufweist.

In der Regel ist davon auszugehen, dass die Dichtung an dem Pumpenzylinder zur Anlage kommt, wenn sie relativ zu dem Pumpenzylinder in Ruhe ist, beispielsweise in den Umkehrpunkten des Pumpenkolbens. Zu Beginn einer Relativbewegung zwischen Pumpenkolben und Pumpenzylinder ist daher das zumindest kurzfristige Auftreten von Festkörperreibung zwischen Dichtung und Pumpenzylinder kaum vermeidbar.

Die Erfindung basiert weiterhin auf der Erkenntnis, dass die Phasen, in denen Festkörperreibung zwischen der Dichtung und dem Pumpenzylinder auftritt, minimiert werden sollten.

Erfindungsgemäß wird dies dadurch gelöst, dass eine radial außen liegende Fläche der Dichtung, die einer Innenfläche des Pumpenzylinders gegenüberliegt, in einem axialen Endbereich der Dichtung so ausgebildet ist, dass sie bei relativ zum Pumpenzylinder ruhendem Pumpenkolben an dem Pumpenzylinder anliegt und dass eine Relativbewegung zwischen Pumpenzylinder und Pumpenkolben in axialer Richtung ein Abheben der Dichtung von dem Pumpenkolben in eine radial nach innen weisende Richtung begünstigt.

Dies wird erfindungsgemäß dadurch erreicht, dass eine radial außen liegende Fläche der Dichtung, die einer Innenfläche des Pumpenzylinders gegenüberliegt, in einem axialen Endbereich der Dichtung unter einem Winkel von 10° bis 60° zur Innenwand des Pumpenzylinders radial nach innen geneigt ist. Der von dem Pumpenkolben zu verdichtende Kraftstoff übt hierbei insbesondere eine nach radial innen wirkende Kraft auf die radial außen liegende Fläche der Dichtung aus, sodass diese von dem Pumpenzylinder insbesondere etwas abheben kann und sich ein Kraftstofffilm zwischen Dichtung und Pumpenzylinder insbesondere ausbilden kann.

Bei der Kraftstoffkolbenpumpe handelt es sich erfindungsgemäß um eine Pumpe, die ein Pumpengehäuse aufweist, in der ein von dem Pumpenkolben begrenzter Arbeitsraum ausgebildet ist. Die Verdichtung des Kraftstoffs erfolgt insbesondere in diesem Arbeitsraum, insbesondere durch eine den Arbeitsraum verkleinernde axiale Bewegung des Pumpenkolbens. Es erfolgt insbesondere eine Verdichtung des Kraftstoff im Arbeitsraum auf ein hohes Druckniveau, beispielsweise auf 100bar bis 600bar.

Die erfindungsgemäße Dichtung ist insbesondere zwischen dem Arbeitsraum und einem Niederdruckbereich der Pumpe ausgebildet. Der Druck im Niederdruckbereich ist geringer als das hohe Druckniveau, das im Arbeitsraum der Pumpe generiert wird. Das Druckniveau im Niederdruckbereich kann beispielsweise bei 3bar bis 10bar liegen und durch eine separate Vorpumpe generiert sein.

Der Arbeitsraum ist insbesondere über ein Auslassventil mit einem Pumpenauslass verbunden und insbesondere über ein elektrisch ansteuerbares Einlassventil mit einem Pumpeneinlass verbunden. Das elektrisch ansteuerbare Einlassventil kann insbesondere als Mengensteuerventil ausgebildet sein. Optional kann zusätzlich zwischen Pumpeneinlass und Arbeitsraum ferner eine Dämpfungseinrichtung zur Dämpfung von Pulsationen im Niederdruckbereich der Pumpe vorgesehen sein.

Die Dämpfungseinrichtung zur Dämpfung von Pulsationen im Niederdruckbereich kann beispielsweise ein zwischen zwei Membranen eingeschlossenes Gasvolumen umfassen, Details hinsichtlich der Dämpfungseinrichtung können wie in der DE10327408A1 gezeigt ausgebildet sein.

Ein weiteres zwischen Pumpenauslass und Arbeitsraum angeordnetes Ventil, das antiparallel zum Auslassventil angeordnet ist, kann vorgesehen sein und insbesondere als Druckbegrenzungsventil für einen mit der Pumpe verbindbaren Hochdruckspeicher wirken.

Vorzugsweise sind das Auslassventil und/oder das Einlassventil und/oder das Druckbegrenzungsventil ortsfest zu dem Pumpengehäuse und insofern auch ortsfest zu dem Pumpenzylinder fixiert. Eine Fixierung dieser Komponenten an dem Pumpenkolben scheidet insofern insbesondere aus. Es ergibt sich der Vorteil, dass die Masse des Pumpenkolbens gering ist und somit die Dynamik bzw. Leichtgängigkeit der Pumpe verbessert ist.

Vorzugsweise ist zusätzlich oder alternativ der Pumpenkolben als Vollkörper ausgebildet, sodass er den bei der Kraftstoffeinspritzung, insbesondere bei der Benzindirekteinspritzung, hohen wirkenden Drücken ohne Verformung standhalten kann. Eine Durchströmbarkeit des Pumpenkolbens in Längsrichtung scheidet insofern aus.

Weitere Details der Anordnung von Arbeitsraum, Auslassventil und Druckbegrenzungsventil zueinander und im Pumpenkörper können beispielsweise wie in der DE102004013307A1 gezeigt ausgebildet sein.

Der Pumpenzylinder kann in einer im Pumpenkörper fixierten Buchse ausgebildet sein. Alternativ kann der Pumpenzylinder auch unmittelbar im Pumpenkörper vorgesehen sein.

Der Pumpenkörper, der Pumpenkolben, der Pumpenzylinder, und/oder alle Pumpenteile, die mit dem Kraftstoff in Berührung kommen, bestehen bevorzugt lediglich aus Stählen und aus Kunstoffen, sodass im Ergebnis eine hohe Beständigkeit auch gegenüber ethanolhaltigen Kraftstoffen und/oder anderen aggressiven Kraftstoffen gegeben ist.

Eine Gruppe von Weiterbildungen zielt darauf ab, das dynamische Abheben der Dichtung von dem Pumpenzylinder weiter zu optimieren. So kann vorgesehen sein, dass die Dichtung im statischen Fall lediglich in dem axialen Endbereich an dem Pumpenzylinder anliegt, nicht aber außerhalb des axialen Endbereichs. Ferner kann vorgesehen sein, dass außerhalb des axialen Endbereichs stets ein Spalt mit dem Spaltmaß s zwischen Dichtung und Pumpenzylinder ausgebildet ist.

Das Spaltmaß s sollte hierbei nicht kleiner sein als die Summe der Rauigkeiten Rz der Oberfläche des Pumpenzylinders und der nach außen weisenden Fläche der Dichtung. Das Auftreten von Festkörper und/oder Mischreibung kann somit weitgehend vermieden werden. Das Spaltmaß s kann beispielsweise mindestens 5µm oder aber mindestens 25 µm betragen.

Die axiale Erstreckung des axialen Endbereichs der Dichtung beträgt hierbei insbesondere 5% - 25% der axialen Erstreckung der Dichtung, beispielsweise 10%, 15% oder 20%.

Erfindungsgemäß ist in dem axialen Endbereich der Dichtung eine an der Dichtung ausgebildete Dichtlippe vorgesehen, die erfindungsgemäß von radial innen durch den zu pumpenden Kraftstoff in Richtung Pumpenzylinder gedrückt werden kann. Auf diese Weise verbessert sich die Dichtwirkung der Dichtung noch weiter. Die Dichtlippe ist insbesondere einstückig an der Dichtung angeformt.

Die Dichtung ist so an dem Pumpenkolben angeordnet, dass der axiale Endbereich der Dichtung in dem auf den Arbeitsraum der Pumpe hinweisenden Endbereich der Dichtung angeordnet ist.

Auf der nach radial außen weisenden Seite der Dichtlippe ist insbesondere ein in Umfangsrichtung um die Dichtung und/oder um die Dichtlippe umlaufender Steg vorgesehen, der die eigentliche Dichtstelle zum Pumpenzylinder bilden kann. Der Steg ist insbesondere einstückig mit der Dichtung und/oder der Dichtlippe ausgebildet.

Nachfolgend werden Beispiele der vorliegenden Erfindung unter Bezugnahme auf die beiliegenden Zeichnungen näher erläutert.

In den Zeichnungen zeigen:
- Figur 1: eine schematische Darstellung eines Kraftstoffsystems einer Brennkraftmaschine mit einem Ausschnitt einer erfindungsgemäßen Kolben-Kraftstoffpumpe
- Figur 2: eine vergrößerte Schnittdarstellung des Ausschnitts der Kolben-Kraftstoffpumpe gemäß Figur 1
- Figur 3: eine alternative Ausführungsform der Kolben-Kraftstoffpumpe
- Figur 4: eine weitere alternative Ausführungsform der Kolben-Kraftstoffpumpe.

Die Figuren 5 und 6 zeigt die Dichtung axial von oben bzw. unten.

In der Figur 7 ist ein axialer Endbereich der Dichtung vergrößert dargestellt.

### Ausführungsformen

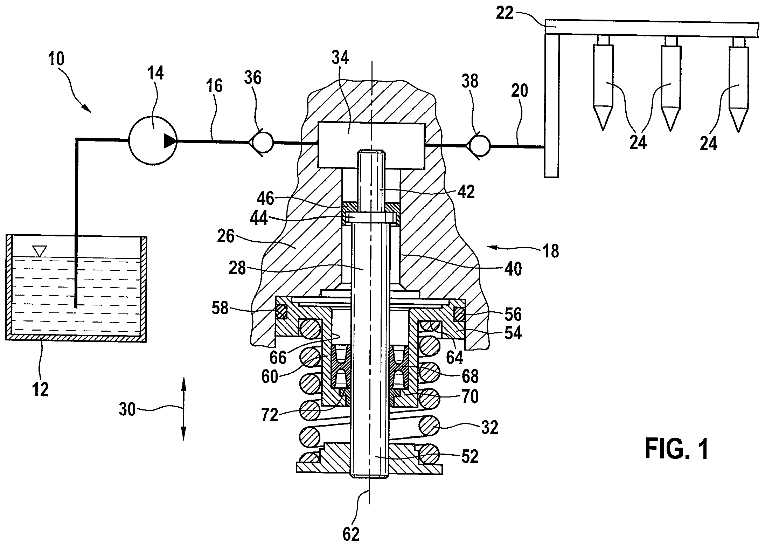

Ein Kraftstoffsystem einer Brennkraftmaschine trägt in Figur 1 insgesamt das Bezugszeichen 10. Es umfasst einen Kraftstoffbehälter 12, aus dem eine elektrische Vorförderpumpe 14 den Kraftstoff in eine Niederdruckleitung 16 fördert. Diese führt zu einer Hochdruckpumpe in Form einer Kolben-Kraftstoffpumpe 18. Von dieser führt eine Hochdruckleitung 20 zu einem Kraftstoffrail 22. An dieses sind mehrere Injektoren 24 angeschlossen, die den Kraftstoff direkt in ihnen jeweils zugeordnete Brennräume (nicht dargestellt) einspritzen.

Die Kolben-Kraftstoffpumpe 18 umfasst ein nur bereichsweise angedeutetes Pumpengehäuse 26, in dem ein Pumpenkolben 28 verschiebbar geführt bzw. gelagert ist. Dieser kann von einem nicht dargestellten Nockenantrieb in eine Hin- und Herbewegung versetzt werden, was durch einen seitlich gezeichneten Doppelpfeil 30 angedeutet ist. Der Pumpenkolben 28 wird von einer Schraubenfeder 32 in einen in Figur 1 unteren Totpunkt beaufschlagt. Der Pumpenkolben 28 und das Pumpengehäuse 26 begrenzen einen Förderraum 34. Dieser Förderraum 34 ist über ein Einlassventil 36 mit der Niederdruckleitung 16 verbindbar. Ferner ist der Förderraum 34 über ein Auslassventil 38 mit der Hochdruckleitung 20 verbindbar.

Sowohl das Einlassventil 36 als auch das Auslassventil 38 sind als Rückschlagventile ausgeführt. Nicht dargestellt, aber möglich ist dabei eine Ausführung des Einlassventils 36 als Mengensteuerventil. Bei einem solchen kann das Einlassventil 36 während eines Förderhubs des Pumpenkolbens 28 zwangsweise geöffnet werden, so dass der Kraftstoff nicht in das Kraftstoffrail 22, sondern zurück in die Niederdruckleitung 16 gefördert wird. Hierdurch kann die von der Kolben-Kraftstoffpumpe 18 in das Kraftstoffrail 22 geförderte Kraftstoffmenge eingestellt werden.

Der Pumpenkolben 28 ist in einem Pumpenzylinder 40 geführt, der insoweit Teil des Pumpengehäuses 26 ist. Der Pumpenkolben 28 weist an einem dem Förderraum 34 zugewandten Ende einen in Figur 1 oberen Endabschnitt 42 auf. In der Umgebung dieses oberen Endabschnitts 42 weist der Pumpenkolben 28 ferner einen kreisringartigen Absatz 44 in der Art eines radial abstehenden umlaufenden Kragens auf. Eine Dichtung 46 kommt an dem Pumpenkolben 28 bzw. an dem Absatz 44 zur Anlage.

An seinem dem Förderraum 34 abgewandten Ende weist der Pumpenkolben 28 ferner einen in Figur 1 unteren Endabschnitt 52 auf. In der Umgebung dieses unteren Endabschnitts 52 ist eine Führungshülse 54 am Pumpengehäuse 26 fest angeordnet. Zwischen der Führungshülse 54 und dem Pumpengehäuse 26 ist eine O-Ring-Dichtung 56 in einer Nut 58 vorgesehen. Die Führungshülse 54 weist einen Zylinderabschnitt 60 auf, der sich koaxial zum Pumpenkolben28 erstreckt und durch welchen die Schraubenfeder 32 geführt ist. Die Schraubenfeder 32 taucht entlang einer Kolbenlängsachse 62 zumindest abschnittsweise in eine Federaufnahmenut 64 der Führungshülse 54 ein, wo sie sich gegen die Führungshülse 54 axial abstützt.

Die Führungshülse 54 weist ferner im Inneren einen kreiszylindrischen Aufnahmeabschnitt 66 auf, der im Wesentlichen durch die innere Umfangswand des Zylinderabschnitts 60 gebildet wird. In diesem Aufnahmeabschnitt 66 ist ein ringförmiges Dichtelement 68 relativ zum Pumpengehäuse 26 ortsfest angeordnet, wobei das Dichtelement 68 einen H-förmigen Querschnitt hat. In einem sich am abragenden Ende des Zylinderabschnitts nach radial einwärts erstreckenden Kragenabschnitt 70 ist ferner ein Führungselement 72 ebenfalls relativ zum Pumpengehäuse 26 ortsfest angeordnet. Dieses somit in axialer Richtung des Pumpenkolbens 28 gesehen von der Dichtung 46 deutlich beabstandete Führungselement 72 stellt zusammen der Dichtung 46 die Führung bzw. Zweipunktlagerung des Pumpenkolbens 28 bereit.

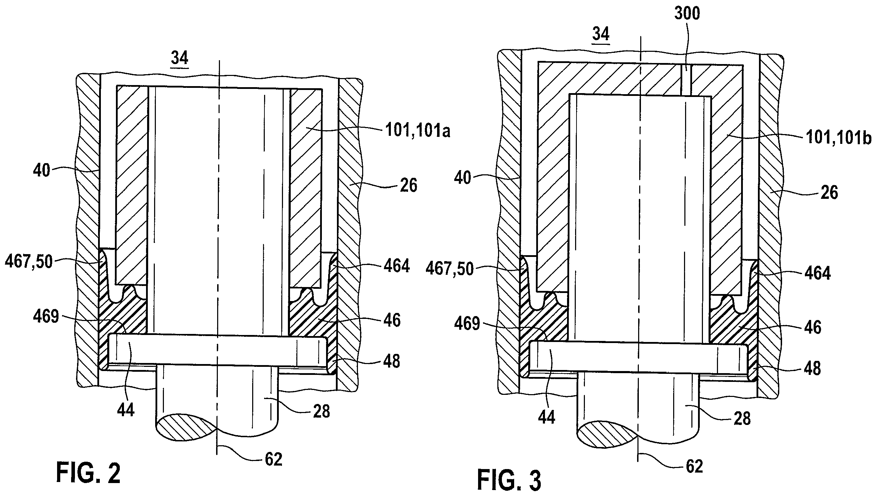

Die Ausgestaltung des Bereichs der Dichtung 46 und ihrer Montage ist vorliegend von besonderer Bedeutung. Auf diese Aspekte wird daher unter Bezugnahme auf die nachfolgenden Figuren 2 - 7 im Detail eingegangen.

Figur 2 zeigt den Bereich der Dichtung 46 der Kolben-Kraftstoffpumpe 18. In einem in Figur 2 unteren Bereich ist die Dichtung 46 soweit über den Absatz 44 des Pumpenkolbens 28 geschoben, dass sie an einer an ihr ausgebildeten Schulter 469 zur axialen Anlage an dem Absatz 44 kommt. Insbesondere der radial außerhalb von der äußeren Mantelfläche des Absatzes 44 vorhandene Materialbereich der Dichtung 46 bildet einen Lager- bzw. Führungsbereich 48, durch den der Pumpenkolben 28 gleitend im Pumpenzylinder 40 geführt und radial gelagert ist.

Der Führungsbereich 48 weist von einer inneren Umfangswand des Pumpenzylinders 40 einen in den Figuren nicht erkennbaren Abstand von etwa 2/100 mm auf. In axialer Richtung, das heißt entlang der Kolbenlängsachse 62, erstreckt sich zum Förderraum 34 hin im Anschluss an den Führungsbereich 48 der als Dichtlippe 467 ausgebildete Abdichtbereich 50. Die Dichtlippe 467 erstreckt sich dabei als an den Führungsbereich 48 angeformter und nach radial außen elastisch vorgespannter Rohrabschnitt im Wesentlichen koaxial zum Pumpenkolben 28. Die Dichtlippe 467 liegt an der inneren Umfangswand des Pumpenzylinders 40 an. Der Führungsbereich 48 und der Abdichtbereich 50 sind in diesem Beispiel einteilig ausgebildet.

Auf den Pumpenkolben 28 ist eine Kappe 101 axial aufgeschoben, die mit der Dichtung 46 radial einwärts der Dichtlippe 467 und arbeitsraumseitig der Schulter 469 zur Anlage kommt. Die Kappe 101 ist durch radiale Pressung auf dem Pumpenkolben 28 festgesetzt und übt eine axial wirkende Kraft auf die Dichtung 46 aus. Die zwischen der Kappe 101 und dem Absatz 44 des Pumpenkolbens 28 angeordnete Dichtung 46 steht somit unter einer axialen Vorspannung.

Die Kappe 101 ist in diesem Beispiel als Hülse 101a ausgebildet, das heißt sie hat die Gestalt eines zweiseitig offenen Rings oder Rohrabschnitts. Die Hülse 101a ist vollständig auf den Pumpenkolben 28 aufgeschoben und schließt mit diesem arbeitsraumseitig bündig ab. Alternativ wäre gleichwohl auch ein noch weiteres Aufschieben der Hülse 101a auf den Pumpenkolben 28 bzw. ein arbeitsraumseitiges Überstehen der Hülse 101a grundsätzlich möglich und gegebenenfalls praktikabel.

Eine Alternative zur Ausbildung der Kappe 101 als Hülse 101a ist in der Figur 3 gezeigt. Hierbei ist die Kappe als Becher 101b ausgebildet. Der Becher 101b weist einen Becherboden und eine Becherwand auf und ist mit seinem offenen Ende voran auf den Pumpenkolben 28 aufgeschoben.

In dem in der Figur 3 dargestellten Beispiel ist der Becher 101b vollständig auf den Pumpenkolben 28 aufgeschoben. Insofern kommt sein Boden an der Stirnseite des Kolbens zur Anlage.

In diesem Beispiel weist der Becherboden in Schnittebene der Figur 3 ein kleines Loch 300 auf, durch das Luft beim Aufschieben des Bechers 101b auf den Pumpenkolben 28 aus dem Becher entweichen kann.

Die Kappe 101 kann grundsätzlich, insbesondere in den Ausführungsformen als Hülse 101a oder als Becher 101b, als Tiefziehteil, zum Beispiel aus Stahl hergestellt sein. Bevorzugt besteht die Kappe 101 aus einem Material, dessen Wärmeausdehnungskoeffizient mit dem des Pumpenkolbens 28 übereinstimmt oder annähernd übereinstimmt. Die Kappe 101 kann beispielsweise aus dem gleichen Material wie der Pumpenkolben 28 bestehen. Die Kappe 101 kann ferner beispielsweise mit einer Wandstärke von 1mm ausgeführt sein.

In den vorangehenden Beispielen ist die Dichtung 46 axial zwischen der Kappe 101 und einem an dem Pumpenkolben 28 einstückig ausgebildeten Absatz 44 ausgebildet. Grundsätzlich ist die Einstückigkeit nicht zwingend erforderlich. Eine fertigungstechnische Vereinfachung ist dadurch möglich, dass der Absatz 44 durch einen in eine Nut des Pumpenkolbens 28 eingelegten Sprengring realisiert ist.

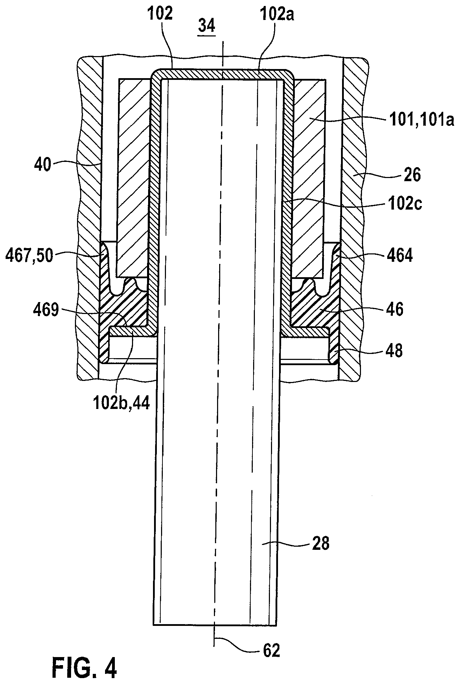

Eine nochmals andere diesbezügliche Lösung zeigt die Figur 4: Hierbei ist ein hutförmiges Halteelement 102 mit seiner Öffnung voran über das arbeitsraumseitige Ende des Pumpenkolbens 28 geschoben. Ein Boden 102a des Halteelements 102 kommt hierbei an der Stirnseite des Pumpenkolbens 28 axial zur Anlage, eine Seitenwand 102c des Halteelement 102 kommt radial an dem Pumpenkolben 28 zur Anlage. Eine dem Boden 102a des Halteelements 102 axial gegenüberliegende Krempe 102 b des Halteelements 102 ist radial abgespreizt und bildet insofern einen Absatz 44 aus.

Wie in den in den Figuren 2 und 3 gezeigten Beispielen ist die Dichtung 46 an dem insofern funktionsgleich vorgesehenen Absatz 44 in Anlage.

Der Pumpenkolben 28 weist in diesem Beispiel entlang seiner gesamten Länge einen einheitlichen Durchmesser auf. Eine besonders einfache und kostengünstige Fertigung beispielsweise eine Bearbeitung des Pumpenkolbens 28 mittels Durchgangsschleifen, also mit ortsfester Schleifscheibe, ist auf diese Weise möglich.

In den in den Figuren 2, 3 und 4 gezeigten Ausführungsbespielen ist vorgesehen, dass die Dichtung 46 zumindest eine einstückig angeformte Noppe 461 aufweist, die in eine axiale Richtung weist, und dass die Dichtung 46 über die zumindest eine Noppe 461 axial anliegt. Beispielhaft weisen die Dichtungen 46 in diesen Beispielen sogar jeweils mehrere Noppen 461 auf, die in Richtung des Arbeitsraums 34 weisen, und über die die Dichtung 46 an der Kappe 101 anliegt und hierdurch axial vorgespannt ist. Die Noppen 461 weisen in diesem Beispiel eine halbkugelige Gestalt auf. Alternativ könnten sie auch kegelig oder kegelstumpfförmig sein. Die Noppen 461 haben zum Beispiel einen Durchmesser von etwa 0,6mm, etwa 10% des Durchmessers der Dichtung 46 und eine Höhe von etwa 0,3mm, etwa 10% der Höhe der Dichtung 46.

Wenngleich die Kappe 101 an den Noppen 461 unter Spannung anliegt, ist die resultierende Verformung der Noppen 461 doch so vergleichsweise gering, dass ein Anliegen der Kappe 101 an einem Bereich der Dichtung 46, der in Umfangsrichtung zwischen den Noppen 461 liegt, unterbleibt.

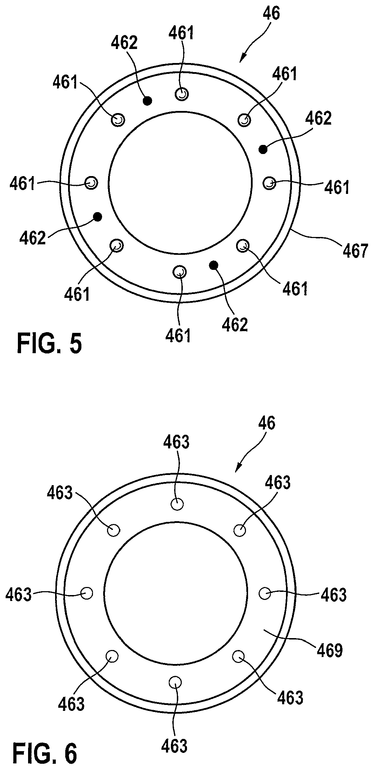

Die Dichtung 46 ist in Figur 5 in Aufsicht, mit Bezug auf die Figuren 2, 3 und 4 von oben, gezeigt. Es wird erkennbar, dass insgesamt 8 einstückig an die Dichtung 46 angeformte Noppen 461 in Richtung des Arbeitsraums 34 weisen, die auf einem gedachten Kreisring um die Kolbenachse 62 angeordnet sind und die zueinander in Umfangsrichtung jeweils um 45° beabstandet sind.

Selbstverständlich könnten die Noppen 461 zusätzlich oder alternativ auch auf der axial gegenüberliegenden Seite der Dichtung 46, an dem Absatz 44, ansonsten unverändert ausgebildet sein.

Die Dichtung 46 besteht in diesen Beispielen aus dem faserverstärkten thermoplastischen Material PEEK 150CA30 oder PA66CF20 und ist mittels Spritzguss hergestellt. Über die nachfolgend erläuterte Spritzgusstechnik, insbesondere die Anordnung der Anspritzpunkte 462 und der Entlüftungspunkte 463, kann erreicht werden, dass die Ausrichtung der Fasern ungeordnet ist.

Hierbei erfolgt der Spritzguss über Anspritzpunkte 462, die in der Figur 5 zu sehen sind, mit den Noppen 461 auf einer gemeinsamen gedachten Kreislinie liegen und um 90° in Umfangsrichtung voneinander beabstandet sind. Die Anspritzpunkte 462 erscheinen am gefertigten Produkt beispielsweise als kleine ringförmige oder sichelförmige Grate oder als kleine Warzen. Die Anspritzpunkte haben einen Durchmesser von oder von nicht mehr als 0,9mm.

Der Spritzguss erfolgt ferner über Entlüftungspunkte 463 die auf der axial gegenüberliegenden Seite der Dichtung 46, in den Figuren 2, 3 und 4 unten angeordnet sind. Sie sind in der Figur 6 zu sehen. Vorliegend sind 8 Entlüftungspunkte 463 vorgesehen, die auf einer gedachten Kreislinie liegen und um 45° in Umfangsrichtung voneinander beabstandet sind. Die Entlüftungspunkte 463 haben einen Durchmesser von oder von nicht mehr als 0,7mm und erscheinen am gefertigten Produkt beispielsweise als kleine Kavitäten.

Es kann vorgesehen sein, dass Anspritzpunkte 462 und Entlüftungspunkte 463 stets in Umfangsrichtung zueinander versetzt angeordnet sind. Auf diese Weise erfolgt eine verbesserte Durchmischung des verflüssigten Spritzgussmaterials in der Spritzgussform und eine Vermeidung einer gerichteten Ausrichtung der Fasern und eine Vermeidung anisotroper Materialeigenschaften der Dichtung 46.

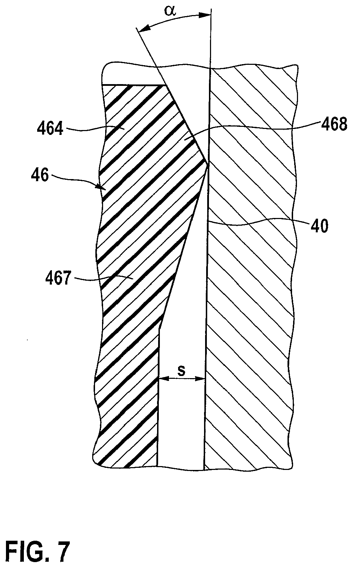

Ein axialer Endbereich 464 der Dichtung 46 ist vorliegend arbeitsraumseitig an der Dichtlippe 467 ausgebildet. Ein entsprechend nochmals vergrößerter Ausschnitt der Dichtung 46 ist in der Figur 7 dargestellt.

Es ist vorgesehen, dass eine radial außen liegende Fläche der Dichtung 46, die einer Innenfläche des Pumpenzylinder 40 gegenüberliegt, in einem axialen Endbereich 464 der Dichtung 46 unter einem Winkel α von 10° bis 60° zur Innenwand des Pumpenzylinders 40 radial nach innen geneigt ist. Dies hat zur Wirkung oder alternativ ist vorgesehen, dass eine Relativbewegung zwischen Pumpenzylinder 40 und Pumpenkolben 28 in axialer Richtung, insbesondere in Richtung auf den Arbeitsraum 34 zu, ein Abheben der Dichtung 46 von dem Pumpenzylinder 28 in eine radial nach innen weisende Richtung begünstigt. In diesem Fall bildet sich zwischen Dichtung 46 und Pumpenzylinder 40 ein aus Kraftstoff bestehender Flüssigkeitsfilm aus, der bei geringfügiger Leckage den Verschleiß der Kolben-Kraftstoffpumpe 18 erheblich vermindert.

Zu diesem Zweck ist an bzw. auf der Dichtlippe 467 ein nach außen weisender, umlaufender Steg 468 einstückig angeformt, der im Querschnitt in Längsrichtung etwa die Form eines gleichschenkligen Dreiecks aufweist, von dem die zwei gegenüberliegenden spitze Ecken in axiale Richtungen weisen und dessen dritte stumpfe Ecke an dem Pumpenzylinder 40 (statisch) anliegt. Es ist vorgesehen, dass lediglich dieser Steg (statisch) an dem Pumpenzylinder 40 zur Anlage kommt, während die Dichtung 46 bzw. die Dichtlippe 467 im Übrigen durch einen Spalt von dem Pumpenzylinder 40 beabstandet ist. Eine Breite s des Spalts beträgt beispielsweise 20µm. Bei Relativbewegung ist, wie oben geschildert, ferner auch ein Abheben des Stegs 468 von dem Pumpenzylinder 40 vorgesehen.

## Patentansprüche

1. Kolben-Kraftstoffpumpe (18) für eine Brennkraftmaschine mit einem Pumpengehäuse (26), in dem ein von dem Pumpenkolben (28) begrenzter Arbeitsraum (34) ausgebildet ist, und einem Pumpenzylinder (40) und einem im Pumpenzylinder (40) axial verschiebbaren Pumpenkolben (28), wobei die Kolben-Kraftstoffpumpe (18) eine am Umfang des Pumpenkolbens (28) angeordnete Dichtung (46) aufweist, wobei eine radial außen liegende Fläche der Dichtung (46), die einer Innenfläche des Pumpenzylinder (40) gegenüberliegt, in einem arbeitsraumseitigen axialen Endbereich (464) der Dichtung (46) unter einem Winkel α von 10° bis 60° zur Innenwand des Pumpenzylinders (40) radial nach innen geneigt ist und dass in dem axialen Endbereichs (464) eine an der Dichtung ausgebildeten Dichtlippe (467) vorgesehen ist, die von radial innen durch den zu pumpenden Kraftstoff in Richtung Pumpenzylinder gedrückt werden kann, sodass die Dichtung (46) bei relativ zum Pumpenzylinder (40) ruhendem Pumpenkolben (28) an dem Pumpenzylinder (40) anliegt und dass eine Relativbewegung zwischen Pumpenzylinder (40) und Pumpenkolben (28) in axialer Richtung auf den Arbeitsraum zu ein Abheben der Dichtung (46) von dem Pumpenzylinder (28) in eine radial nach innen weisende Richtung begünstigt.

2. Kolben-Kraftstoffpumpe (18) nach Anspruch 1, **dadurch gekennzeichnet, dass** die Dichtung (46) außerhalb des axialen Endbereichs durch einen umlaufenden Spalt um mindestens 5µm, insbesondere sogar um mindestens 25µm, gegenüber dem Pumpenzylinder (40) beabstandet ist und höchstens in dem axialen Endbereich (464) an dem Pumpenzylinder (40) anliegt, insbesondere an einem in Umfangsrichtung um die Dichtung verlaufenden Steg (468).

3. Kolben-Kraftstoffpumpe (18) nach einem der Ansprüche 1 oder 2, **dadurch gekennzeichnet, dass** die axiale Erstreckung des axialen Endbereichs (464) 5% - 25% der axialen Erstreckung der Dichtung (46) beträgt.

4. Kolben-Kraftstoffpumpe (18) nach einem der vorangehenden Ansprüche, **dadurch gekennzeichnet, dass** die Dichtlippe (467) eine axiale Erstreckung aufweist, die im Bereich von 20% bis 50% der axialen Erstreckung der Dichtung liegt.

5. Kolben-Kraftstoffpumpe (18) nach einem der vorangehenden Ansprüche, **dadurch gekennzeichnet, dass** die Dichtlippe (467) an der Dichtung einstückig angeformt ist.

## Claims

1. Piston-type fuel pump (18) for an internal combustion engine, having a pump housing (26), in which there is formed a working chamber (34) which is delimited by the pump piston (28), and having a pump cylinder (40) and a pump piston (28) which is axially displaceable in the pump cylinder (40), wherein the piston-type fuel pump (18) has a seal (46) arranged on the circumference of the pump piston (28), wherein a radially externally situated surface of the seal (46), which surface faces an inner surface of the pump cylinder (40), is, in a working-chamber-side axial end region (464) of the seal (46), inclined radially inwards at an angle α of 10° to 60° with respect to the inner wall of the pump cylinder (40), and that, in the axial end region (464), there is provided a sealing lip (467) which is formed on the seal and which can be pushed radially from the inside, by the fuel for pumping, in the direction of the pump cylinder such that the seal (46) bears against the pump cylinder (40) when the pump piston (28) is at rest relative to the pump cylinder (40) and that a relative movement between pump cylinder (40) and pump piston (28) in an axial direction towards the working chamber promotes a lift-off of the seal (46) from the pump cylinder (28) in a radially inward direction.

2. Piston-type fuel pump (18) according to Claim 1, **characterized in that** the seal (46) is, outside the axial end region, spaced apart from the pump cylinder (40) by at least 5 µm, in particular even by at least 25 µm, by means of an encircling gap, and bears against the pump cylinder (40) at most in the axial end region (464), in particular at a ridge (468) which runs around the seal in a circumferential direction.

3. Piston-type fuel pump (18) according to either of Claims 1 and 2, **characterized in that** the axial extent of the axial end region (464) amounts to 5% - 25% of the axial extent of the seal (46).

4. Piston-type fuel pump (18) according to any of the preceding claims, **characterized in that** the sealing lip (467) has an axial extent which lies in the range from 20% to 50% of the axial extent of the seal.

5. Piston-type fuel pump (18) according to any of the preceding claims, **characterized in that** the sealing lip (467) is formed integrally on the seal.

## Revendications

1. Pompe à carburant à piston (18) pour un moteur à combustion interne, comprenant un boîtier de pompe (26) dans lequel est réalisé un espace de travail (34) limité par le piston de pompe (28), et un cylindre de pompe (40) et un piston de pompe (28) déplaçable axialement dans le cylindre de pompe (40), la pompe à carburant à piston (18) présentant un joint d'étanchéité (46) disposé sur la périphérie du piston de pompe (28), une surface du joint d'étanchéité (46), située radialement à l'extérieur, qui est opposée à une surface intérieure du cylindre de pompe (40), étant inclinée radialement vers l'intérieur dans une région d'extrémité axiale (464) du joint d'étanchéité (46), du côté de l'espace de travail, suivant un angle α de 10° à 60° par rapport à la paroi intérieure du cylindre de pompe (40) et une lèvre d'étanchéité (467) réalisée au niveau du joint d'étanchéité étant prévue dans la région d'extrémité axiale (464), laquelle peut être pressée radialement depuis l'intérieur par le carburant à pomper dans la direction du cylindre de pompe de telle sorte que le joint d'étanchéité (46) s'applique contre le cylindre de pompe (40) lorsque le piston de pompe (28) est au repos par rapport au cylindre de pompe (40) et qu'un déplacement relatif entre le cylindre de pompe (40) et le piston de pompe (28) dans la direction axiale vers l'espace de travail favorise un soulèvement du joint d'étanchéité (46) du cylindre de pompe (28) dans une direction orientée radialement vers l'intérieur.

2. Pompe à carburant à piston (18) selon la revendication 1, **caractérisée en ce que** le joint d'étanchéité (46) à l'extérieur de la région d'extrémité axiale est espacé par rapport au cylindre de pompe (40) d'un interstice périphérique d'au moins 5 pm, en particulier même d'au moins 25 pm, et s'applique au maximum dans la région d'extrémité axiale (464) contre le cylindre de pompe (40), en particulier contre une nervure (468) s'étendant dans la direction périphérique autour du joint d'étanchéité.

3. Pompe à carburant à piston (18) selon l'une quelconque des revendications 1 et 2, **caractérisée en ce que** l'étendue axiale de la région d'extrémité axiale (464) vaut 5 % à 25 % de l'étendue axiale du joint d'étanchéité (46).

4. Pompe à carburant à piston (18) selon l'une quelconque des revendications précédentes, **caractérisée en ce que** la lèvre d'étanchéité (467) présente une étendue axiale qui est située dans une plage de 20 % à 50 % de l'étendue axiale du joint d'étanchéité.

5. Pompe à carburant à piston (18) selon l'une quelconque des revendications précédentes, **caractérisée en ce que** la lèvre d'étanchéité (467) est façonnée d'une seule pièce sur le joint d'étanchéité.
